# EUROPÄISCHE PATENTANMELDUNG

(11) **EP 3 671 312 A1**
(43) Veröffentlichungstag der Anmeldung: **24.06.2020**
(21) Anmeldenummer: 18214301.6
(22) Anmeldetag: 20.12.2018
(51) Int. Cl.: G02B 26/10, G01S 17/02, G03B 17/17, G06K 7/10, H04N 5/225

(54) **OPTISCHER SENSOR**

(71) Anmelder: Leuze electronic GmbH + Co. KG, 73277 Owen/Teck (DE)
(72) Erfinder: Stepan, Jürgen, 73252 Lenningen (DE); Müller, Thomas, 73119 Zell u.A. (DE)
(74) Vertreter: Ruckh, Rainer Gerhard

(57) **Zusammenfassung**

Die Erfindung betrifft einen optischen Sensor (1) mit einem Bildsensor (2) umfassend eine matrixförmige Anordnung von Empfangselementen (3), mit einer Lichtstrahlen emittierenden Beleuchtungseinheit (5) und mit einer Auswerteeinheit (4) zur Auswertung von an den Ausgängen der Empfangselemente (3) anstehenden Empfangssignalen. Eine empfangsseitige Ablenkeinheit (7) ist vorgesehen. Weiterhin sind Synchronisierungsmittel (8) zur Synchronisierung der empfangsseitigen Ablenkeinheit (7) mit dem Bildsensor (2) vorgesehen.

## Beschreibung

Die Erfindung betrifft einen optischen Sensor.

Derartige optische Sensoren umfassen einen Bildsensor mit einer matrixförmigen Anordnung von Empfangselementen, deren Empfangssignale in einer Auswerteeinheit ausgewertet werden. Weiterhin umfassen diese Sensoren eine Lichtstrahlen emittierende Beleuchtungseinheit, wobei mit den Lichtstrahlen der Beleuchtungseinheit ein Bereich beleuchtet wird, in welchem zu detektierende Objekte angeordnet sind.

Diese optischen Sensoren können insbesondere als Codeleser ausgebildet sein, mit welchem auf Objekten angeordnete Codes erfasst werden.

Um Codes in einem möglichst großen Erfassungsbereich erfassen zu können, werden üblicherweise mehrere Codeleser eingesetzt. Der Einsatz mehrerer Sensoren ist jedoch kostenaufwändig. Insbesondere ist dabei auch ein erhöhter Verkabelungsaufwand erforderlich, um die einzelnen Codeleser miteinander zu verbinden und gegebenenfalls an eine übergeordnete Einheit anzuschließen. Zudem ist die Parametrierung einer solchen Anordnung mit einem hohen Aufwand verbunden.

Aus der DE 20 2013 009 198 U1 ist eine Vorrichtung zum Umlenken und zur Verbreiterung des Sichtbereichs einer Kamera bekannt. Diese Vorrichtung weist ein erstes Spiegelelement auf, das gegenüber der optischen Achse der Kamera in einer Längsrichtung verkippt ist, um der Kamera Licht aus einem bezüglich der optischen Achse seitlich gelegenen Sichtbereich zuzuleiten. Das erste Spiegelelement ist zusätzlich in einer Querrichtung senkrecht zu der Längsrichtung verkippt ist. Weiterhin weist die Vorrichtung ein zweites Spiegelelement neben dem ersten Spiegelelement auf, das in Längsrichtung und in Querrichtung gegenüber dem ersten Spiegelelement verkippt ist.

Der Erfindung liegt die Aufgabe zugrunde, einen optischen Sensor der eingangs genannten Art bereitzustellen, welcher bei konstruktiv einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit einem Bildsensor umfassend eine matrixförmige Anordnung von Empfangselementen, mit einer Lichtstrahlen emittierenden Beleuchtungseinheit und mit einer Auswerteeinheit zur Auswertung von an den Ausgängen der Empfangselemente anstehenden Empfangssignalen. Eine empfangsseitige Ablenkeinheit ist vorgesehen. Synchronisierungsmittel zur Synchronisierung der empfangsseitigen Ablenkeinheit mit dem Bildsensor sind vorgesehen.

Mit dem erfindungsgemäßen optischen Sensor und mit dem Verfahren zur Bilderfassung, das mit dem optischen Sensor umgesetzt wird, wird eine hohe Funktionalität bei der Objekterkennung ermöglicht.

Ein erster wesentlicher Aspekt der Erfindung besteht darin, dass durch die dem Bildsensor zugeordnete empfangsseitige Ablenkeinheit dessen Bildfeld erheblich erweitert wird, das heißt durch die mit der empfangsseitigen Ablenkeinheit durchgeführte Ablenkung der von Objekten in Richtung des Bildsensors zurückreflektierten Lichtstrahlen kann mittels dem Bildsensor in einem erweiterten Bildfeld eine Objekterkennung durchgeführt werden und zwar bei voller Auflösung. Das heißt, dass unabhängig von der Ablenkposition der Lichtstrahlen, die mit der empfangsseitigen Ablenkeinheit gerade vorgegeben wird, eine gleichbleibende Auflösung von zu erkennenden Objekten gewährleistet wird.

Mit der empfangsseitigen Ablenkeinheit wird ein Rationalisierungseffekt derart erzielt, dass für eine Erweiterung des Bildfeldes nicht mehrere optische Sensoren vorgesehen werden müssen. Vielmehr reicht hierzu ein einzelner, mit der empfangsseitigen Ablenkeinheit ausgestatteter optischer Sensor aus.

Ein weiterer wesentlicher Aspekt der Erfindung besteht darin, dass Synchronisierungsmittel vorgesehen sind, mittels derer die empfangsseitige Ablenkeinheit mit dem Bildsensor synchronisiert sind. Damit ist der Betrieb des Bildsensors optimal auf die Ablenkbewegungen der empfangsseitigen Ablenkeinheit angepasst.

Vorteilhaft sind dabei die Ablenkbewegungen der Lichtstrahlen, die mit der empfangsseitigen Ablenkeinheit erzeugt werden, an die Bildaufnahmen des Bildsensors angepasst, so dass für alle Ablenkpositionen eine gleichbleibend hohe Bildqualität von mit dem Bildsensor erzeugten Bildern gewährleistet ist. Insbesondere werden dadurch unerwünschte Verzerrungen der Bilder des Bildsensors verhindert.

Gemäß einer vorteilhaften Ausführungsform ist die empfangsseitige Ablenkeinheit von einem Schwenkspiegel gebildet. Die Ablenkbewegung kann motorisch, das heißt durch einen Elektromotor erfolgen. Generell sind auch mit Druckluft oder magnetischen Antrieben getriebene Schwenkspiegel denkbar.

Die so ausgebildete empfangsseitige Ablenkeinheit zeichnet sich durch einen besonders einfachen, kompakten und kostengünstigen Aufbau aus.

Gemäß einer vorteilhaften Ausgestaltung ist mit dem Schwenkspiegel eine Ablenkbewegung in einer oder in zwei Raumrichtungen durchgeführt.

Alternativ kann die empfangsseitige Ablenkeinheit auch von beweglichen optischen Komponenten wie einer Linse oder einem Prisma gebildet sein.

Auch ist es prinzipiell möglich, die empfangsseitige Ablenkeinheit so auszubilden, dass der Bildsensor selbst beweglich, insbesondere schwenkbar, gelagert ist.

Gemäß einer vorteilhaften Weiterbildung der Erfindung sind Mittel zur Änderung der Abstrahlrichtung der Lichtstrahlen der Beleuchtungseinheit vorgesehen.

Damit erfolgt nicht nur empfangsseitig sondern auch sendeseitig eine Ablenkung der Lichtstrahlen.

Der Vorteil der zusätzlichen sendeseitigen Ablenkung der Lichtstrahlen besteht darin, dass damit der aktuell beleuchtete Bereich an das aktuell durch die empfangsseitige Ablenkeinheit eingestellte Bildfeld des Bildsensors angepasst werden kann. Dies bedeutet, dass für alle Ablenkpositionen der empfangsseitigen Ablenkeinheit und die damit eingestellten Bildfelder des Bildsensors jederzeit der von den Lichtstrahlen der Beleuchtungseinheit beleuchtete Bereich hieran optimal angepasst ist, wodurch der Bildsensor Bilder mit gleichbleibend hoher Beleuchtung aufnehmen kann.

Besonders vorteilhaft sind hierzu die Mittel zur Änderung der Abstrahlrichtung der Lichtstrahlen mit der empfangsseitigen Ablenkeinheit synchronisiert.

Die sendeseitige Strahlablenkung kann auf unterschiedliche Weise realisiert werden.

Gemäß einer ersten Variante ist mittels der empfangsseitigen Ablenkeinheit die Abstrahlrichtung der Lichtstrahlen der Beleuchtungseinheit geändert.

In diesem Fall kann beispielsweise die Beleuchtungseinheit in der empfangsseitigen Ablenkeinheit integriert sein. Beispielsweise kann die Beleuchtungseinheit auf den die empfangsseitige Ablenkeinheit bildenden Schwenkspiegel angeordnet sein.

Gemäß einer zweiten Variante ist als Mittel zur Änderung der Abstrahlrichtung der Lichtstrahlen eine sendeseitige Ablenkeinheit vorgesehen.

Diese sendeseitige Ablenkeinheit ist vorteilhaft von einem weiteren motorisch getriebenen Schwenkspiegel gebildet. Weiterhin kann die sendeseitige Ablenkeinheit auch von beweglichen optischen Komponenten wie einer Linse oder einem Prisma gebildet sein.

Gemäß einer dritten Variante weist die Beleuchtungseinheit mehrere in unterschiedliche Richtungen Lichtstrahlen emittierende Lichtquellen auf, wobei die Mittel zur Änderung der Abstrahlrichtung der Lichtstrahlen für eine selektive Aktivierung der Lichtquellen ausgebildet sind.

Der Vorteil dieser Variante besteht darin, dass für die Richtungsänderung der Abstrahlrichtung der Lichtstrahlen keine bewegten Teile benötigt werden.

Gemäß einer ersten Variante ist die oder jede Ablenkeinheit im optischen Sensor integriert.

Gemäß einer zweiten Variante bildet die oder jede Ablenkeinheit eine externe Einheit außerhalb des optischen Sensors. In diesem Fall ist dieser mit der oder jeder Ablenkeinheit über eine berührungslose oder kabelgebundene Datenübertragung verbunden.

Vorteilhaft sind die sendeseitigen Ablenkbewegungen der Lichtstrahlen mit der empfangsseitigen Ablenkeinheit und auch mit dem Bildsensor synchronisiert, wodurch eine reproduzierbare, exakte Anpassung des von den Lichtstrahlen beleuchteten Bereichs und des aktuellen Bildfeldes des Bildsensor an die Bildaufnahmen des Bildsensors erhalten wird.

Der Umfang der mit den Synchronisierungsmitteln durchgeführten Synchronisierung ist generell durch Parameter der Ablenkeinheit und des Bildsensors bestimmt, wobei vorteilhaft der Umfang der Synchronisierung durch Parametereingaben eines Benutzers vorgegeben werden kann.

Auch eine automatische Einstellung von Parametern ist möglich, wobei die Parameter beispielsweise in einem Justage-Modus ermittelt werden können.

Dabei sind Parameter des Bildsensors Anzahlen, Haltezeiten, Einstellungen oder Wiederholraten von Bildaufnahmen.

Weiterhin sind Parameter der Ablenkeinheit die Schrittweiten von Schwenkpositionen oder Geschwindigkeiten von Schwenkbewegungen.

Auf diese Weise können unterschiedliche Einstellungen des optischen Sensors realisiert werden.

Durch eine geeignete Synchronisierung der empfangsseitigen Ablenkeinheit mit dem Bildsensor, können insbesondere einzelne Bilder des Bildsensors zu einem größeren Bild zusammengesetzt werden. Um Bildlücken zu vermeiden, können sich die einzelnen Bilder überlappen, wobei Überlappungsbereiche aus dem Gesamtbild durch geeignete Rechenoperationen eliminiert werden können.

Durch einen Vergleich mehrerer Einzelbilder können Bildkorrekturen vorgenommen werden.

Durch die Auswertung einer Folge von zeitlich äquidistant aufgenommenen Einzelbildern mit bewegten Objekten, können die Geschwindigkeiten von Objekten erfasst werden.

Weiterhin können durch die Synchronisierung mit den Synchronisierungsmitteln gezielt die Parameter der Bildaufnahmen des optischen Sensors variiert werden.

Durch die Vorgabe der Schrittweite der Ablenkpositionen der empfangsseitigen Ablenkeinheit, insbesondere der Schwenkpositionen des Schwenkspiegels, kann das örtliche Raster der Einzelbildaufnahmen vorgegeben werden und damit auch der Überlappungsgrad der Einzelbilder.

Weiterhin kann durch die Synchronisierungsmittel die Anzahl der Bildaufnahmen pro Zeiteinheit, die mit dem Bildsensor durchgeführt werden variiert werden. Des Weiteren kann die Haltezeit der Bildaufnahmen vorgegeben werden. Durch Vorgabe der Geschwindigkeit der Änderungen der Ablenkpositionen der empfangsseitigen Ablenkeinheit kann vorgegeben werden, wieviel Einzelbilder in einer Ablenkposition der empfangsseitigen Ablenkeinheit aufgenommen werden.

Des Weiteren können unterschiedliche Bildeinstellungen der Bildaufnahmen des Bildsensors für die einzelnen Ablenkpositionen oder für einzelne Scans der empfangsseitigen Ablenkeinheit vorgegeben werden.

Auch kann die Anzahl der Wiederholungen der Bildaufnahmen für komplette Scans der empfangsseitigen Ablenkeinheit eingestellt werden, wobei der Versatz der Einzelbilder für die Wiederholungen vorgebbar ist.

Gemäß einer vorteilhaften Weiterbildung der Erfindung sind mittels den Synchronisierungsmitteln der Bildsensor und die empfangsseitige Ablenkeinheit mit externen Einheiten synchronisiert, wobei die externen Einheiten, insbesondere von externen Sensoren und/oder von Steuermitteln von Fördereinheiten gebildet sind.

Damit können die Bildaufnahmen, insbesondere an durch die externe Einheiten vorgegebene oder kontrollierte Objektbewegungen, angepasst werden. Insbesondere werden durch diese Synchronisierung stehende Bilder im Bildsensor generiert, was eine wesentliche Voraussetzung für eine einwandfreie Objekterkennung ist.

Gemäß einer vorteilhaften Ausführungsform ist der optische Sensor als Codeleser ausgebildet, mit dem Codes, wie zum Beispiel Barcodes, erfasst werden können.

Gemäß einer alternativen Ausgestaltung ist der optische Sensor als Überwachungssensor ausgebildet. In diesem Fall wird mit dem optischen Sensor ein Überwachungsbereich daraufhin überbracht, ob dort ein Objekt eindringt. Vorteilhaft ist der optische Sensor dann als Distanzsensor ausgebildet, wobei vorteilhaft Distanzmessungen für jedes Empfangselement nach dem Puls-Laufzeit-Prinzip durchgeführt werden, das heißt es wird die Laufzeit der Lichtstrahlen von der Beleuchtungseinheit zu einem Objekt und zurück zu einem Empfangselement des Bildsensors bestimmt.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Erstes Beispiel von Ablenkeinheit für den optischen Sensor gemäß Figur 1.
- Figur 3:: Zweites Beispiel von Ablenkeinheit für den optischen Sensor gemäß Figur 1.
- Figur 4:: Drittes Beispiel von Ablenkeinheit für den optischen Sensor gemäß Figur 1.
- Figur 5:: Erstes Beispiel einer Objekterkennung mit dem optischen Sensor gemäß Figur 1.
- Figur 6:: Zweites Beispiel einer Objekterkennung mit dem optischen Sensor gemäß Figur 1.

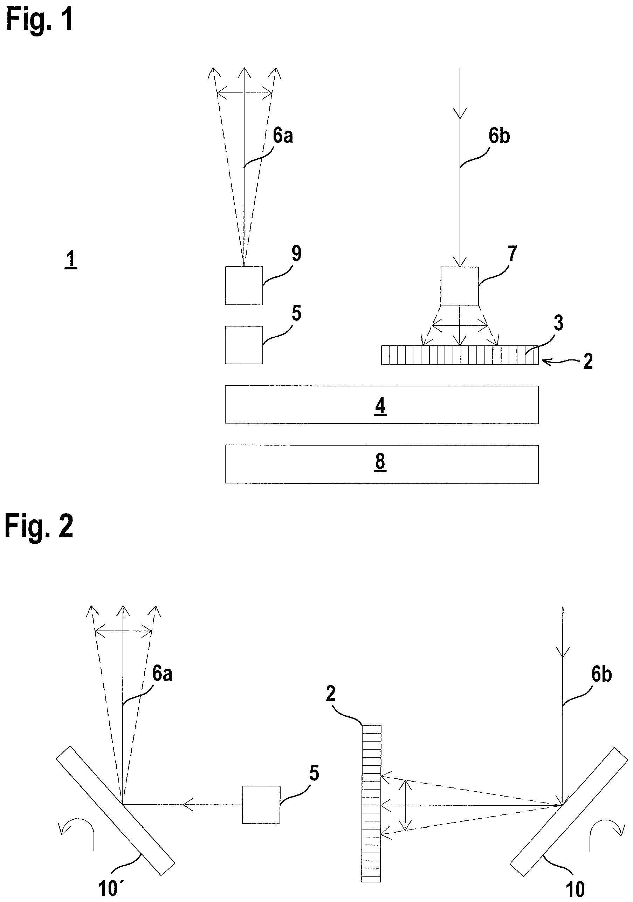

Figur 1 zeigt in einer stark schematisierten Darstellung ein Ausführungsbeispiel des erfindungsgemäßen optischen Sensors 1. Der optische Sensor 1 ist im vorliegenden Fall als Codeleser ausgebildet, mittels dessen Codes A erfasst werden können. Die in Figur 1 dargestellten Komponenten können in einem nicht dargestellten Gehäuse integriert sein.

Der optische Sensor 1 umfasst einen Bildsensor 2, der eine matrixförmige, also zeilen- und spaltenweise ausgebildete Anordnung von Empfangselementen 3 aufweist. Der Bildsensor 2 kann von einer CCD- oder CMOS-Matrix ausgebildet sein. Dem Bildsensor 2 kann eine nicht dargestellte Empfangsoptik vorgeordnet sein.

Mit dem Bildsensor 2 können in einem Bildfeld Bilder aufgenommen werden. Die Bildinformationen, das heißt die an den Ausgängen der Empfangselemente 3 anstehenden Empfangssignale werden in einer Auswerteeinheit 4 ausgewertet, die von einem Mikroprozessor oder dergleichen gebildet sein kann. Insbesondere ist in der Auswerteeinheit 4 eine Dekodiereinheit vorgesehen, mittels derer mit dem Bildsensor 2 erfasste Codes A dekodiert werden können.

Zur Ausleuchtung des Bildfeldes des Bildsensors 2 ist eine Beleuchtungseinheit 5 vorgesehen, die Lichtstrahlen als Sendelichtstrahlen 6a emittiert. Die Beleuchtungseinheit 5 kann insbesondere von einer Anordnung von Leuchtdioden gebildet sein.

Erfindungsgemäß ist dem Bildsensor 2 eine empfangsseitige Ablenkeinheit 7 vorgeordnet. Mit der empfangsseitigen Ablenkeinheit 7 erfolgt eine vorzugsweise periodische Ablenkung der von einem Objekt zurückreflektierten Lichtstrahlen, das heißt der Empfangslichtstrahlen 6b, wie mit dem Doppelpfeil in Figur 1 veranschaulicht.

Die mit der empfangsseitigen Ablenkeinheit 7 durchgeführten Ablenkbewegungen und die Bildaufnahmen mit dem Bildsensor 2 sind durch Synchronisierungsmittel 8 synchronisiert. Die Synchronisierungsmittel 8 sind von einer Rechnereinheit, wie zum Beispiel einem Mikroprozessor gebildet. Die Synchronisierungsmittel 8 können in der Auswerteeinheit 4 integriert sein.

Optional kann der Beleuchtungseinheit 5 wie in Figur 1 dargestellt eine sendeseitige Ablenkeinheit 9 zugeordnet sein. Mit der sendeseitigen Ablenkeinheit 9 wird die Strahlenrichtung der von der Beleuchtungseinheit 5 emittierten Sendelichtstrahlen 6a vorzugsweise periodisch geändert. Die sendeseitige Ablenkeinheit 9 wird mittels der Synchronisierungsmittel 8 mit der empfangsseitigen Ablenkeinheit 7 und dem Bildsensor 2 synchronisiert.

Figur 2 zeigt ein erstes Ausführungsbeispiel einer empfangsseitigen Ablenkeinheit 7 und sendeseitigen Ablenkeinheit 9 für den optischen Sensor 1 gemäß Figur 1. Die empfangsseitige Ablenkeinheit 7 besteht aus einem um eine Drehachse drehbaren Schwenkspiegel 10, dessen Oberfläche eine Spiegelfläche ausbildet, an welcher die von einem Objekt kommenden Lichtstrahlen reflektiert werden. Der Schwenkspiegel 10 ist mittels eines elektrischen Antriebs angetrieben und führt so periodische Ablenkbewegungen aus. Der Antrieb wird von den Synchronisierungsmitteln 8 gesteuert.

Mit dem Schwenkspiegel 10 wird eine eindimensionale Ablenkbewegung durchgeführt. Generell kann der Schwenkspiegel 10 auch so ausgebildet sein, dass dieser eine zweidimensionale Ablenkbewegung ausführt.

Die sendeseitige Ablenkeinheit 9 ist im vorliegenden Fall auch von einem Schwenkspiegel 10 gebildet, der von einem weiteren elektrischen Antrieb angetrieben ist, so dass dieser Schwenkspiegel 10' periodische Ablenkbewegungen zur Ablenkung der von der Beleuchtungseinheit 5 emittierten Lichtstrahlen durchführt. Auch dieser elektrische Antrieb wird von den Synchronisierungsmitteln 8 gesteuert.

Generell können die sendeseitige und die empfangsseitige Ablenkeinheit 7, 9 im optischen Sensor 1, das heißt in dessen Gehäuse integriert sein. Alternativ können diese auch separate Einheiten außerhalb des optischen Sensors 1 sein. In diesem Fall kann eine kabelgebundene oder berührungslose Datenverbindung zwischen den Ablenkeinheiten 7, 9 und dem optischen Sensor 1 bestehen. Beispiel für berührungslose Datenverbindungen sind Bluetooth-, WiFi- oder optische Verbindungen.

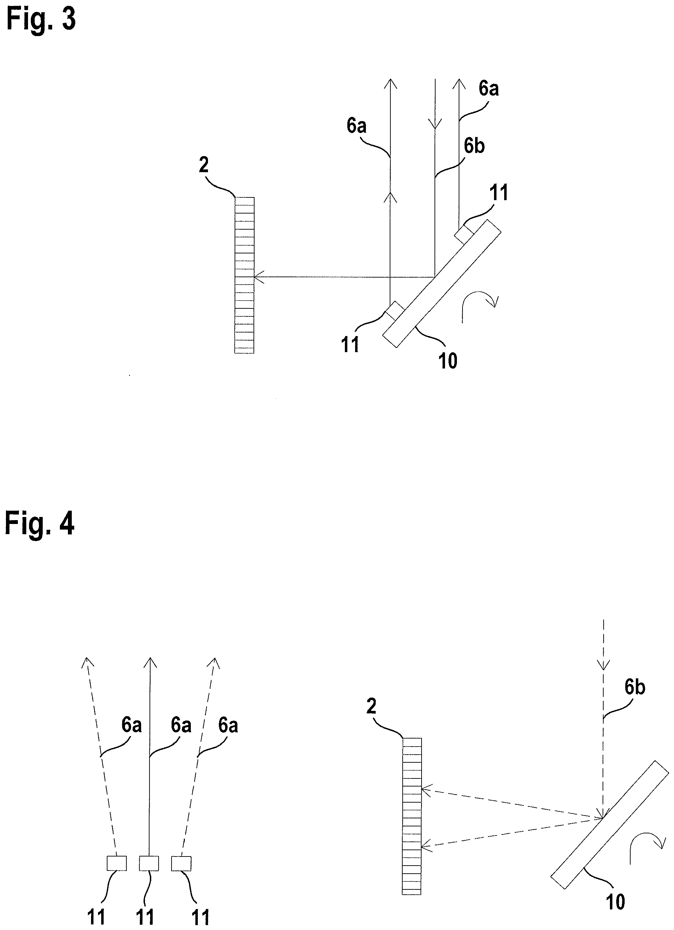

Figur 3 zeigt ein weiteres Beispiel, bei dem die Beleuchtungseinheit 5 bildende Lichtquellen 11 auf dem die empfangsseitige Ablenkeinheit 7 bildenden Schwenkspiegel 10 angeordnet sind. In diesem Fall wird die Beleuchtungseinheit 5 mit der empfangsseitigen Ablenkeinheit 7 mitbewegt. Die Lichtquellen 11 können von einzelnen Leuchtdioden gebildet sein. Obwohl in Figur 3 nur zwei Lichtquellen 11 dargestellt sind, können natürlich auch nur eine oder mehr als zwei Lichtquellen 11 vorgesehen sein.

Figur 4 zeigt ein weiteres Beispiel, bei dem die empfangsseitige Ablenkeinheit 7 wieder aus dem Schwenkspiegel 10 besteht. In diesem Fall ist die Beleuchtungseinheit 5 von einer Anzahl von stationär angeordneten Lichtquellen 11 gebildet. Obwohl nur drei Lichtquellen 11 dargestellt sind, kann natürlich auch eine andere Zahl von Lichtquellen 11 vorgesehen sein. Die Lichtquellen 11 sind von Leuchtdioden gebildet und werden von den Synchronisierungsmitteln 8 gesteuert. Die Leuchtquellen 11 strahlen Lichtstrahlen in unterschiedlichen Richtungen ab. Eine Ablenkung der Strahlrichtung der Lichtstrahlen der Beleuchtungseinheit 5 wird dadurch erzielt, dass die Synchronisierungsmittel 8 gemäß einer zeitlichen Abfolge selektiv Lichtquellen 11 aktiviert werden, die Licht in unterschiedliche Richtungen abstrahlen.

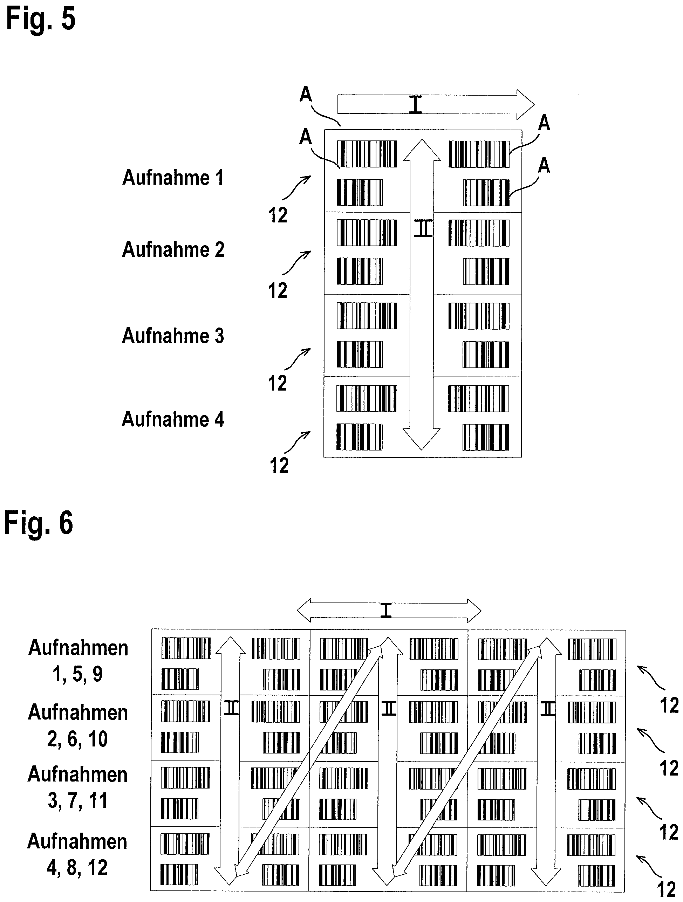

Figur 5 zeigt ein erstes Beispiel einer Objekterfassung mit dem optischen Sensor 1 gemäß Figur 1. Figur 5 zeigt mehrere Objekte 12 in nebeneinander liegenden Spuren, die auf einem nicht dargestellten Fördermittel wie einem Förderband transportiert werden. Die Objekte 12 sind jeweils mit Codes A gekennzeichnet, die vorteilhaft unterschiedlich sind.

Die Objekte 12 werden auf dem Förderband in einer Förderrichtung (gekennzeichnet durch den Pfeil I) transportiert. Die Fördergeschwindigkeit wird durch Steuermittel des Förderbandes gesteuert. Die Förderbewegung der Objekte 12 wird durch nicht dargestellte Sensoren erfasst. Die Steuermittel und/oder die externen Sensoren sind mit der empfangsseitigen Ablenkeinheit 7 und dem Bildsensor 2 über die Synchronisierungsmittel 8 synchronisiert.

Bei dem Ausführungsbeispiel gemäß Figur 5 erfolgt die Ablenkung der Lichtstrahlen mit der empfangsseitigen Ablenkeinheit 7 in der mit dem Pfeil II gekennzeichneten Richtung, das heißt senkrecht zur Fördergeschwindigkeit des Förderbands. Durch diese Ablenkbewegung wird eine Bildfelderweiterung des Bildsensors 2 derart erreicht, dass alle Spuren von Objekten 12 mit dem optischen Sensor 1 erfasst werden, so dass die Codes A aller Objekte 12 mit dem optischen Sensor 1 erfasst und dekodiert werden können.

Durch einen Schwenkbereich in Förderrichtung können Objekte 12 auch bei hoher Objektgeschwindigkeit sicher identifiziert werden.

In Figur 5 sind vier aufeinander folgende Bildaufnahmen (Aufnahmen 1 ... 4) dargestellt. Diese ergänzen sich zu einem Gesamtbild, in welchem alle Codes A aller Objekte 12 verbunden sind.

Figur 6 zeigt eine Erweiterung des Beispiels gemäß Figur 5 derart, dass eine zweidimensionale Ablenkung mit der empfangsseitigen Ablenkeinheit 7 erfolgt (wobei die Einzelablenkungen mit den Pfeilen II gekennzeichnet werden). In zwölf nacheinander folgenden Aufnahmen von Einzelbildern mit dem Bildsensor 2 wird ein Gesamtbild erhalten, in dem nun zwölf Objekte 12 mit Codes A vorhanden sind.

### Bezugszeichenliste

- (1): Optischer Sensor
- (2): Bildsensor
- (3): Empfangselement
- (4): Auswerteeinheit
- (5): Beleuchtungseinheit
- (6a): Sendelichtstrahlen
- (6b): Empfangslichtstrahlen
- (7): Empfangsseitige Ablenkeinheit
- (8): Synchronisierungsmittel
- (9): Sendeseitige Ablenkeinheit
- (10): Schwenkspiegel
- (10'): Schwenkspiegel
- (11): Lichtquelle
- (12): Objekt

- A: Codes

## Patentansprüche

1. Optischer Sensor (1) mit einem Bildsensor (2) umfassend eine matrixförmige Anordnung von Empfangselementen (3), mit einer Lichtstrahlen emittierenden Beleuchtungseinheit (5) und mit einer Auswerteeinheit (4) zur Auswertung von an den Ausgängen der Empfangselemente (3) anstehenden Empfangssignalen, **dadurch gekennzeichnet, dass** eine empfangsseitige Ablenkeinheit (7) vorgesehen ist, und dass Synchronisierungsmittel (8) zur Synchronisierung der empfangsseitigen Ablenkeinheit (7) mit dem Bildsensor (2) vorgesehen sind.

2. Optischer Sensor (1) nach Anspruch 1, **dadurch gekennzeichnet, dass** die empfangsseitige Ablenkeinheit (7) von einem Schwenkspiegel (10) gebildet ist.

3. Optischer Sensor (1) nach Anspruch 2, **dadurch gekennzeichnet, dass** mit dem Schwenkspiegel (10) eine Ablenkbewegung in einer oder in zwei Raumrichtungen durchgeführt ist.

4. Optischer Sensor (1) nach einem der Ansprüche 1 - 3, **dadurch gekennzeichnet, dass** Mittel zur Änderung der Abstrahlrichtung der Lichtstrahlen der Beleuchtungseinheit (5) vorgesehen sind.

5. Optischer Sensor (1) nach Anspruch 4, **dadurch gekennzeichnet, dass** die Mittel zur Änderung der Abstrahlrichtung der Lichtstrahlen mit der empfangsseitigen Ablenkeinheit (7) synchronisiert sind.

6. Optischer Sensor (1) nach einem der Ansprüche 4 oder 5, **dadurch gekennzeichnet, dass** mittels der empfangsseitigen Ablenkeinheit (7) die Abstrahlrichtung der Lichtstrahlen der Beleuchtungseinheit (5) geändert ist.

7. Optischer Sensor (1) nach einem der Ansprüche 4 oder 5, **dadurch gekennzeichnet, dass** als Mittel zur Änderung der Abstrahlrichtung der Lichtstrahlen eine sendeseitige Ablenkeinheit (9) vorgesehen ist.

8. Optischer Sensor (1) nach einem der Ansprüche 4 oder 5, **dadurch gekennzeichnet, dass** die Beleuchtungseinheit (5) mehrere in unterschiedliche Richtungen Lichtstrahlen emittierende Lichtquellen (11) aufweist, wobei die Mittel zur Änderung der Abstrahlrichtung der Lichtstrahlen für eine selektive Aktivierung der Lichtquellen (11) ausgebildet sind.

9. Optischer Sensor (1) nach einem der Ansprüche 1 - 8, **dadurch gekennzeichnet, dass** die oder jede Ablenkeinheit in diesem integriert ist.

10. Optischer Sensor (1) nach einem der Ansprüche 1 - 8, **dadurch gekennzeichnet, dass** die oder jede Ablenkeinheit eine separate Einheit bildet, die außerhalb des optischen Sensors (1) angeordnet ist.

11. Optischer Sensor (1) nach Anspruch 10, **dadurch gekennzeichnet, dass** dieser mit der oder jeder Ablenkeinheit über eine berührungslose oder kabelgebundene Datenübertragung verbunden ist.

12. Optischer Sensor (1) nach einem der Ansprüche 1 - 11, **dadurch gekennzeichnet, dass** durch die Synchronisierungsmittel (8) Bildaufnahmen des Bildsensors (2) mit den Ablenkbewegungen der oder jeder Ablenkeinheit synchronisiert sind.

13. Optischer Sensor (1) nach einem der Ansprüche 1 - 12, **dadurch gekennzeichnet, dass** der Umfang der Synchronisierung durch Parametereingaben vorgebbar ist.

14. Optischer Sensor (1) nach Anspruch 13, **dadurch gekennzeichnet, dass** Parameter des Bildsensors (2) Anzahlen, Haltezeiten, Einstellungen oder Wiederholraten von Bildaufnahmen sind.

15. Optischer Sensor (1) nach einem der Ansprüche 13 oder 14, **dadurch gekennzeichnet, dass** Parameter der Ablenkeinheit die Schrittweiten von Schwenkpositionen oder Geschwindigkeiten von Schwenkbewegungen sind.

16. Optischer Sensor (1) nach einem der Ansprüche 1 - 15, **dadurch gekennzeichnet, dass** durch mit den Synchronisierungsmitteln (8) im Bildsensor (2) generierte Bilder einen Überlapp aufweisen oder sich zu einem größeren Bild ergänzen.

17. Optischer Sensor (1) nach einem der Ansprüche 1 - 15, **dadurch gekennzeichnet, dass** mittels den Synchronisierungsmitteln (8) der Bildsensor (2) und die empfangsseitige Ablenkeinheit (7) mit externen Einheiten synchronisiert sind, wobei die externen Einheiten insbesondere von externen Sensoren und/oder von Steuermitteln von Fördereinheiten gebildet sind.

18. Optischer Sensor (1) nach einem der Ansprüche 1 - 17, **dadurch gekennzeichnet, dass** dieser ein Codeleser oder ein Überwachungssensor ist.
